# FASCICULE DE BREVET EUROPEEN

(11) **EP 4 213 683 B1**
(45) Date de publication et mention de la délivrance du brevet: **11.02.2026**
(21) Numéro de dépôt: 21787004.7
(22) Date de dépôt: 17.09.2021
(51) Int. Cl.: A45D 19/04, A45D 44/02, F16M 11/10, F16M 11/24, F16M 11/32, A45D 42/18, A45F 3/14

(54) **DISPOSITIF PORTABLE DE LAVAGE ET DE COIFFAGE DES CHEVEUX**
TRAGBARE VORRICHTUNG ZUM WASCHEN UND STYLEN VON HAAR
PORTABLE DEVICE FOR WASHING AND STYLING HAIR

(30) Priorité: 18.09.2020 FR 2009460
(43) Date de publication de la demande: 26.07.2023
(73) Titulaire: Lefebvre, Benoit, 62280 Saint Martin Boulogne (FR)
(72) Inventeur: Lefebvre, Benoit, 62280 Saint Martin Boulogne (FR)
(74) Mandataire: Yes My Patent
(86) Numéro de dépôt international: PCT/FR2021/000109
(87) Numéro de publication internationale: WO 2022/058664

(56) Documents cités:
- FR-A1- 2 996 995
- JP-A- 2019 076 410
- US-B1- 10 251 458

## Description

### [Domaine technique]

La présente invention concerne d'une manière générale les dispositifs portables de lavage et de coiffage des cheveux destinés aux coiffeurs exerçant leur profession aux domiciles de leurs clients.

### [Technique antérieure]

Les dispositifs portables de lavage des cheveux que l'on trouve sur le marché comportent classiquement un bac rigide comprenant un corps creux ouvert sur le dessus et pourvu d'un col d'accueil pour la nuque, un support prévu pour supporter ce bac au dessus du sol, ainsi qu'un tuyau souple d'évacuation des eaux usées destiné à être raccordé au bac.

Le support est généralement constitué d'un pied et d'un tube télescopique permettant de régler la hauteur du bac.

Ces éléments constituant le dispositif de lavage sont démontables les uns des autres afin de faciliter son transport.

Toutefois, même une fois démontés, ces dispositifs de lavage demeurent particulièrement encombrants et difficiles à transporter pour le coiffeur.

Par ailleurs, ces dispositifs sont uniquement destinés au lavage des cheveux et ne procurent aucune assistance au coiffage du fait de l'absence de table de travail.

Le document US 10 251 458 B1 divulgue un dispositif portable de lavage et de coiffage des cheveux, selon l'état de la technique.

On connaît de la demande de brevet FR 2 996 995 A1 un dispositif portable de lavage et de coiffage des cheveux comportant un bac de lavage comprenant un col d'accueil pour la nuque constitué d'une enveloppe extérieure déformable fixé au bac et renfermant un matériau léger tel que des billes de polystyrène mobiles dont la circulation à l'intérieur de l'enveloppe est générée par la force d'appuis de la nuque sur le col, permettant ainsi à l'encolure d'épouser l'empreinte des différentes formes de nuques pour un meilleur confort d'appui du pourtour du cou, d'étanchéité et pour la récupération du ruissellement des eaux de lavage.

Le bac de lavage comprend également un collecteur d'évacuation horizontal des eaux usées présentant une portion rigide intercalée entre deux portions souples annelées.

Le dispositif comporte en outre un support télescopique dont l'une des extrémités est montée articulée à pivotement sur la face extérieure du fond du bac à proximité de son extrémité arrière, de sorte à permettre de régler via des moyens de serrage/desserrage l'inclinaison du bac en configuration d'utilisation du dispositif mais également de rabattre ce trépied dans sa position escamoté contre et le long de ce bac afin d'optimiser le volume occupé par le dispositif lorsqu'il n'est pas utilisé.

Un couvercle est par ailleurs rapportable fixement et de manière amovible sur le dessus ouvert du bac de sorte à constituer une table de desserte lors de la phase de coiffage des cheveux.

Dans la configuration escamotée du trépied, l'encombrement de ce dispositif demeure toutefois important et son transport est malaisé pour le coiffeur, sauf à prévoir une valise de transport à roulettes dédiée et suffisamment volumineuse pour le loger entièrement.

### [Exposé de l'invention]

La présente invention vise donc à améliorer la situation.

Elle propose à cet effet un dispositif portable de lavage et de coiffage des cheveux, tel que défini dans la revendication 1. Le dispositif comporte un bac de lavage comprenant un corps creux ouvert sur le dessus et pourvu d'un col d'accueil pour la nuque, un support mobile entre une position escamotée de rangement et une position déployée de service dans laquelle il est apte à supporter ledit bac au dessus du sol, ainsi qu'un couvercle rapportable fixement et de manière amovible sur le dessus dudit bac de sorte à constituer une table de desserte lors de la phase de coiffage des cheveux, ledit support étant montable de manière amovible sur ledit bac, ce support étant en outre apte à être entièrement logé à l'intérieur de ce même bac dans sa position escamotée de rangement, et ledit corps creux comprenant deux logements d'accueil prévus chacun pour loger une extrémité correspondante dudit support en position escamotée de rangement.

L'invention permet ainsi de réduire l'encombrement du dispositif de lavage et de coiffage dans sa configuration de rangement, de sorte à faciliter son transport pour le coiffeur à domicile.

Selon des caractéristiques préférées dudit dispositif selon l'invention :
- celui-ci comporte un tuyau souple d'évacuation des eaux usées présentant une première extrémité raccordable de manière amovible à un embout de raccordement relié fluidiquement à un orifice d'évacuation ménagé dans la paroi de fond dudit corps creux, ledit tuyau étant également apte à être logé enroulé sur lui-même à l'intérieur de ce corps creux contre sa paroi de fond ;
- celui-ci comporte également un caisson réceptacle prévu pour recueillir les eaux usées transportées par ledit tuyau souple d'évacuation et étant dimensionné pour loger entièrement ledit bac avec ledit couvercle rapporté sur le dessus de ce bac ;
- ledit caisson réceptacle comporte au moins une poignée de préhension dans sa partie supérieure ;
- ledit caisson réceptacle comporte au moins un couple de deux glissières ménagées en regard l'une de l'autre sur les faces internes de deux de ses parois et prévues pour coopérer à coulissement avec ledit couvercle lors de la mise en place dans ce caisson dudit bac avec ce couvercle rapporté sur le dessus de ce bac, de sorte à assurer le plaquage dudit couvercle contre une autre paroi de ce même caisson ;
- ledit bac comporte également un bouchon rapportable de manière amovible sur ledit embout de raccordement ;
- lesdits logements d'accueil sont agencés au dessus de la paroi de fond dudit corps creux de sorte que ledit support y soit logé dans une position surplombant cette paroi de fond ;
- ledit bac comporte deux anneaux d'attache pour une bandoulière de portage agencés sur la face extérieure de l'une des parois dudit corps creux ;
- ledit bac comporte deux passages de sangle ménagés dans des excroissances inférieures dudit corps creux s'étendant en dessous de sa paroi de fond ;
- ledit support est constitué par un trépied comportant trois jambes télescopiques montées à pivotement par leurs extrémités supérieures sur un sabot recevant à coulissement une colonne portant à son extrémité supérieure une tête sur laquelle est montée articulée à pivotement une plate-forme support apte à être fixée de manière amovible par vissage sur le dessous dudit bac ;
- ledit bac comporte également une platine métallique s'étendant en dessous de la paroi de fond dudit corps et y étant fixée rigidement, ladite platine présentant un perçage taraudé permettant d'assurer la fixation par vissage de ladite plate-forme du trépied sur le dessous de ce bac ;
- ledit couvercle comporte un panneau ainsi qu'un premier miroir monté articulé à pivotement sur ledit panneau entre une position déployée d'utilisation dans laquelle il saille verticalement au dessus de dernier, et une position rabattue dans laquelle il est logé dans une empreinte de forme correspondante ménagée dans ce panneau ;
- ledit couvercle comprend également un second miroir logeable à coulissement et de manière amovible dans ledit premier miroir ; et/ou
- ledit couvercle comprend également une poignée de préhension.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] représente une vue éclatée en perspective du dispositif portable de lavage et de coiffage des cheveux selon l'invention dans sa configuration d'utilisation ;
[Fig 2] est une vue en perspective de dessus du bac du dispositif selon l'invention ;
[Fig 3] représente une vue en perspective du dessous du bac du dispositif selon l'invention ;
[Fig 4] est une vue en perspective de dessus du bac à l'intérieur duquel sont disposés le tuyau d'évacuation des eaux usées enroulé sur lui-même et le support en en position escamotée ;
[Fig 5] représente une vue en perspective du bac sur lequel a été rapporté fixement le couvercle de sorte à former une malle de rangement logeant le tuyau d'évacuation des eaux usées et le support ;
[Fig 6] est une vue en perspective du caisson réceptacle des eaux usées du dispositif selon l'invention ; et
[Fig 7] est une vue en perspective du dispositif selon l'invention en configuration de rangement dans laquelle la malle de rangement formée par le bac et le couvercle est hébergée à l'intérieur du caisson réceptacle des eaux usées.

### [Description détaillée]

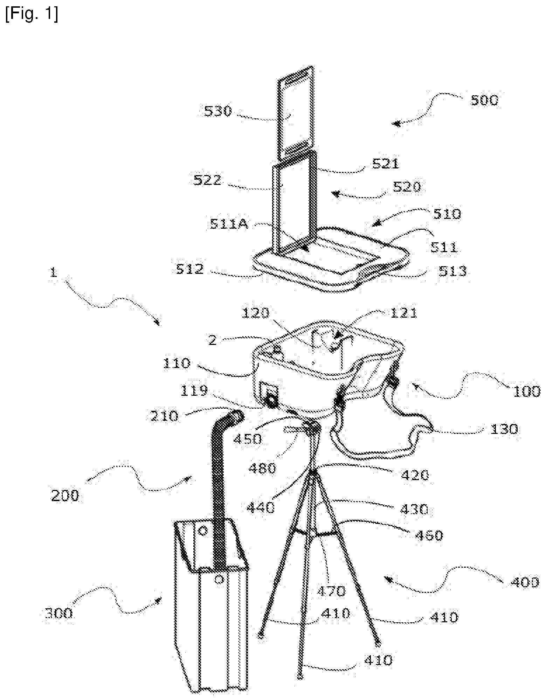

La figure 1 représente une vue éclatée en perspective et dans sa configuration d'utilisation d'un dispositif portable de lavage et de coiffage des cheveux 1 selon l'invention, destiné à être utilisé par un coiffeur au domicile de ses clients.

En référence à la figure 1, le dispositif 1 comporte un bac de lavage 100, un tuyau souple d'évacuation des eaux usées 200, un caisson réceptacle des eaux usées 300, un support 400 mobile entre une position escamotée de rangement et une position déployée de service lui permettant de supporter le bac 100 au dessus du sol, ainsi qu'un couvercle 500 rapportable de manière amovible sur ce bac 100.

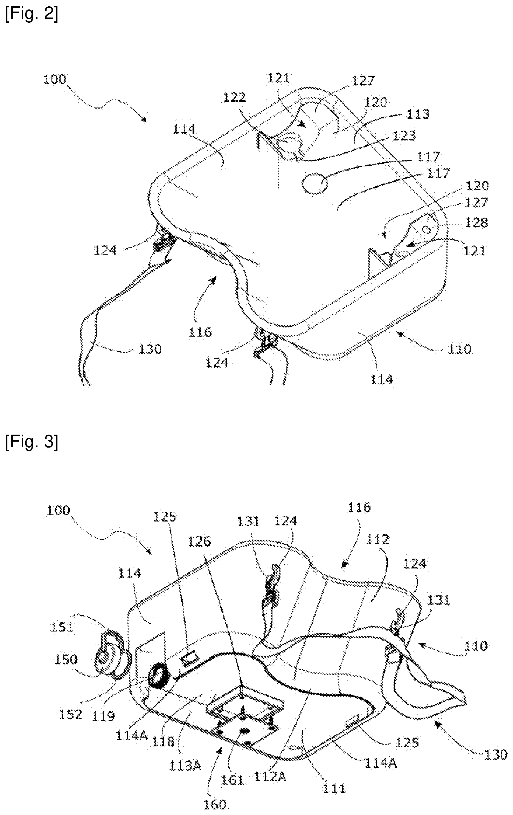

Tel qu'illustré sur les figures 2 et 3, le bac de lavage 100 comporte un corps creux en matière plastique 110, ouvert sur le dessus et délimité par une paroi de fond 111, une paroi avant 112, une paroi arrière 113 et deux parois latérales 114 se faisant face.

Afin de faciliter son nettoyage et d'éviter le développement des bactéries, les bords et coins internes de ce corps creux 110 présentent avantageusement des profils arrondis.

Le corps 110 comprend un col d'accueil 116 pour la nuque ménagé dans sa paroi avant 112, ainsi qu'un orifice d'évacuation 117 ménagé dans sa paroi de fond 111 et relié fluidiquement à une conduite rigide 118 s'étendant sous cette paroi de fond 111.

La conduite 118 débouche latéralement sur un embout de raccordement fileté 119 sur lequel peut être rapporté de manière amovible par vissage une première extrémité 210 du tuyau souple d'évacuation 200 permettant d'évacuer les eaux usées vers le caisson réceptacle 300 (voir figure 1).

En référence à la figure 2, le corps 110 comporte également deux pilastres creux 120 adossés contre les faces internes de ses deux parois latérales 114 et agencés en regard l'un de l'autre.

Les sommets de chacun de ces pilastres 120 définissent chacun une concavité hémicylindrique 121 s'étendant au dessus de la paroi de fond 11 et formant un logement d'accueil pour une extrémité correspondante du support 400 dans sa position escamotée de rangement, tel que cela sera explicité plus avant dans la suite de cette description.

Chacune de ces concavités 121 présente avantageusement une empreinte cylindrique 122 destinée à accueillir une bouteille ou un flacon 2 (voir figure 1) contenant par exemple du shampoing.

Pour des raisons d'hygiène et afin d'éviter l'accumulation d'eau stagnante dans le fond de ces empreintes 122, un canal d'évacuation 123 est en outre ménagé entre chaque empreinte 122 et le bord interne de la concavité correspondante 121.

Le sommet de chaque pilastre 120 comprend également une paroi plane horizontale 127 s'étendant en l'arrière de la concavité 121 jusqu'à la paroi arrière 113 du corps 110, l'une au moins de ces deux parois planes 127 présentant un orifice circulaire 128 destiné à être traversé par le flexible d'une douchette non représentée et pouvant également servir de support d'accueil pour son pommeau lorsque cette dernière n'est pas utilisée.

Deux anneaux 124 sont par ailleurs agencés sur la face extérieure de la paroi avant 112 du corps 110, de part et d'autre du col d'accueil 116, de sorte à permettre l'accroche d'une bandoulière de portage 130 pourvue à ses deux extrémités d'organes d'accrochage rapide 131 de type mousqueton.

Comme cela est bien visible sur la figure 3, les parois avant 112, arrière 113 et latérales 114 se prolongent en dessous de la paroi de fond 111 par des excroissances inférieures correspondantes 112A, 113A et 114A.

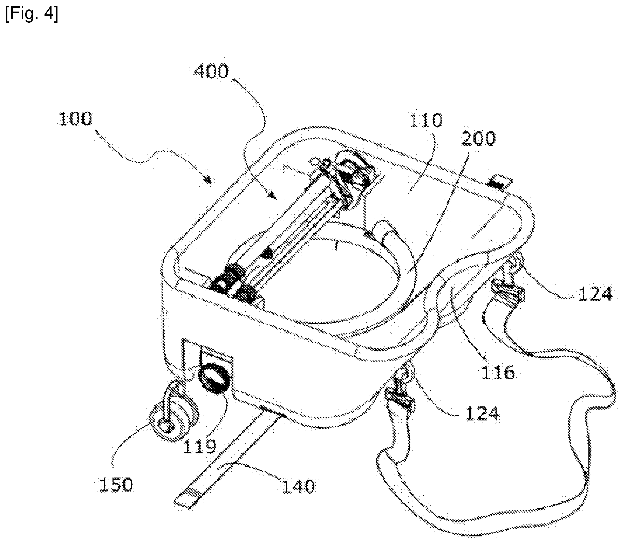

Deux passages de sangles 125 sont en outre ménagés dans les deux excroissances inférieures latérales 114A du corps 110, ces passages 125 étant destinés à recevoir une sangle d'attache 140 (visible sur la figure 4) permettant par exemple de solidariser le bac 100 contre la poignée télescopique d'une valise à roulettes.

Le bac 100 comporte également un bouchon 150 apte à être vissé de manière amovible sur l'embout de raccordement fileté 119 afin d'empêcher l'écoulement de l'eau contenue dans ce bac.

Ce bouchon 150 est avantageusement raccordé de manière imperdable au corps 110 par l'intermédiaire d'une charnière élastique 151 le reliant à une bague 152 montée à force sur le fond de l'embout 119.

Toujours en référence à la figure 3, le bac 100 comporte en outre une platine métallique 160 s'étendant parallèlement et en dessous de la paroi de fond 111 du corps 110 à laquelle elle est solidarisée via une pluralité de vis de fixation vissées dans des fûts 126 saillants depuis la face inférieure de cette paroi de fond 111.

Cette platine 160 présente en partie centrale un perçage taraudé 161 destiné à permettre d'assurer la fixation du support 400 sur le dessous du bac 100.

En référence à la figure 1, ce support 400 est constitué par un trépied comportant trois jambes télescopiques 410 montées à pivotement par leurs extrémités supérieures sur un sabot 420 recevant à coulissement une colonne 430 portant à son extrémité supérieure une tête 440 sur laquelle est montée articulée à pivotement une plate-forme support 450 apte à être fixée de manière amovible sur la platine 160 par l'intermédiaire d'une vis de montage non visible sur les figures et venant se visser dans le perçage taraudé 161.

Ce trépied 400 est mobile entre :
- une position repliée de rangement illustrée sur la figure 3 dans laquelle la colonne 430 occupe sa position la plus basse (la tête 440 reposant contre le sabot 420) et où les jambes télescopiques 410 sont rétractées et étroitement adjacentes en entourant la colonne 430, et
- une position déployée de service illustrée sur la figure 1 dans laquelle la colonne 430 est relevée et où les jambes télescopiques 410 sont allongées et écartées angulairement (l'allongement de ces jambes étant réglable de sorte à permettre d'ajuster la hauteur de la plate-forme support 450 vis-à-vis du sol).

Afin d'améliorer sa stabilité dans sa position déployée, le trépied 400 comprend également trois maillons de jambe 460 présentant chacun une première extrémité articulée à pivotement à une jambe correspondante 410 et une seconde extrémité articulée à pivotement sur un collier 470 entourant la colonne 430 et apte à coulisser le long de cette dernière lorsque les jambes 410 sont écartées ou rapprochées les unes des autres.

Une poignée de serrage 480 permet en outre de verrouiller la position angulaire de la plate-forme support 450 vis-à-vis de la tête 440, de sorte à verrouiller l'inclinaison du bac 100 par rapport à l'horizontale après le montage de ce trépied 400 sur ce bac 100.

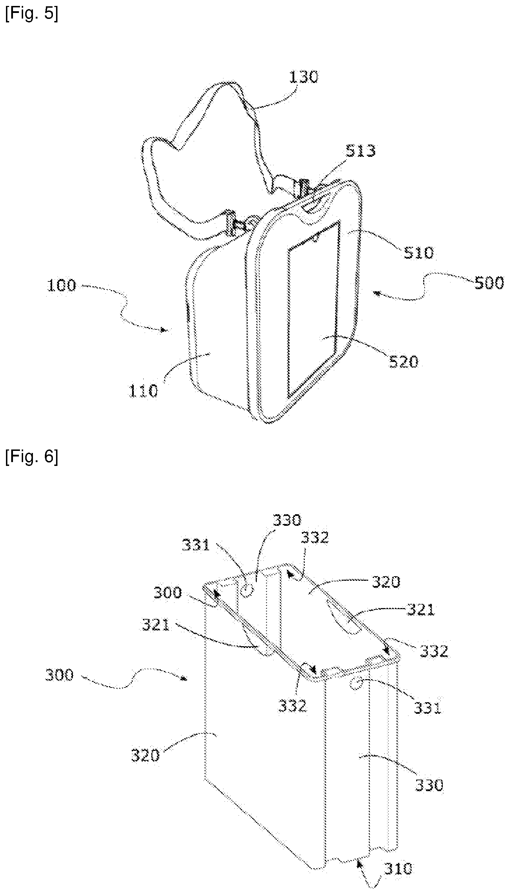

Le couvercle 500 comporte un corps principal en matière plastique 510 constitué d'un panneau rectangulaire 511 bordé par un bandeau périphérique 512. Ce couvercle 500 comporte également un premier miroir 520 comprenant un cadre 521 supportant un élément réfléchissant 522 et monté articulé à pivotement sur le panneau 511 entre une position déployée d'utilisation illustré sur la figure 1 dans laquelle il saille verticalement au dessus de dernier, et une position rabattue illustrée sur la figure 5 dans laquelle il est logé dans une empreinte 511A de forme correspondante ménagée dans ce même panneau 511.

Un second miroir 530 est en outre logé à coulissement et de manière amovible dans le premier miroir 520 via une fente d'introduction ménagée sur l'un des côtés du cadre 521, ce second miroir 530 permettant par exemple au coiffeur de montrer au client sa nuque après coiffage.

Ce couvercle 500 est rapportable fixement et de manière amovible sur le bac 100 de sorte à constituer une table de desserte lors de la phase de coiffure (figure 1), ainsi qu'à former avec ce bac 100 une malle de rangement (figure 5) prévue pour loger le trépied 400 en position escamotée mais également le tuyau d'évacuation 200 enroulé sur lui-même tel qu'illustré sur la figure 4.

On remarquera que les concavités 121 logeant les deux extrémités du trépied 400 permettent, après la mise en place du couvercle 500, de maintenir ce trépied 400 dans une position surélevée vis-à-vis du fond du bac 100 recevant le tuyau 200, de sorte à empêcher ce même trépied 400 de se déplacer à l'intérieur du bac 100 ce qui pourrait générer des bruits parasites et risquerait d'écraser ou de pincer ce tuyau 200 durant le transport de la malle.

Pour des raisons d'hygiène, le trépied en position escamotée sera avantageusement disposé dans un sac non représenté avant sa mise en place à l'intérieur du bac 100.

Le corps principal 510 de ce couvercle 500 comporte en outre une poignée de préhension 513 ménagée dans le panneau 511 afin de faciliter la portabilité manuelle de cette malle.

En référence à la figure 6, le caisson réceptacle des eaux usées 300 est constitué par un corps parallélépipédique creux, ouvert sur le dessus et délimité une paroi de fond horizontale 310, deux parois principales verticales 320, ainsi que deux parois latérales verticales 330.

Le caisson 300 comprend également deux poignées de préhension 321 ménagées en regard l'une de l'autre à proximité des extrémités supérieures des deux parois principales verticales 320 et permettant de faciliter sa vidange dans la cuvette des toilettes ou dans un évier.

Ce caisson 300 comporte également deux orifices circulaires 331 ménagés en partie supérieure des deux parois latérales verticales 330 et aptes chacun à recevoir la seconde extrémité du tuyau souple d'évacuation 200 afin d'assurer son maintien lors de l'écoulement des eaux usées pendant la phase de lavage des cheveux.

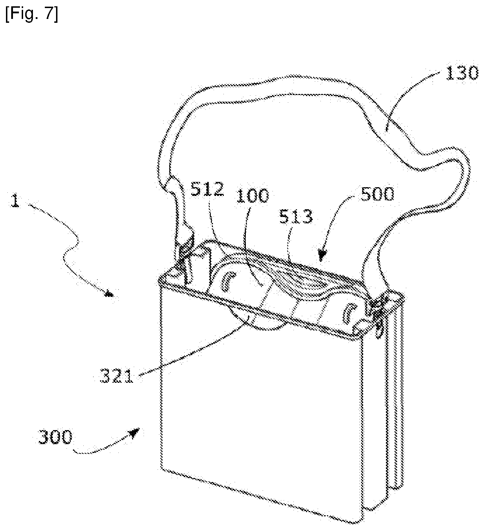

Tel qu'illustré sur la figure 7, le caisson 300 est en outre dimensionné pour loger entièrement la malle de rangement formée par le bac 100 et le couvercle 500, de sorte à faciliter encore le transport de l'ensemble du dispositif de lavage et de coiffage 1. Toujours en référence à cette figure 7, on remarquera que les deux orifices 331 permettent également d'assurer la fixation des deux extrémités de la bandoulière 130 sur ce caisson 300 afin de permettre le portage à l'épaule de l'ensemble du dispositif 1.

Toujours dans l'optique de faciliter le transport de l'ensemble du dispositif 1, le caisson 300 est en outre pourvu d'au moins un couple de glissières constitués chacun par deux glissières 332 ménagées en regard l'une de l'autre sur les faces internes des parois latérales 330.

Les deux glissières 332 de chaque couple sont prévues pour coopérer à coulissement avec les portions latérales du bandeau périphérique 512 du couvercle 500 lors de la mise en place de la malle de rangement dans le caisson 300, de sorte à assurer le plaquage de ce couvercle 500 contre une paroi principale correspondante 320 de ce caisson 300 et la superposition de leur poignées respectives 513, 321 afin de permettre une meilleure préhension.

Selon d'autres variantes de réalisation non représentées, le dispositif selon l'invention peut également être dépourvu de caisson réceptacle des eaux usées, de sorte à limiter son coût de revient et sa masse.

On rappelle enfin que la présente invention ne se limite pas aux formes de réalisation décrites et représentées, mais englobe également toutes les variantes d'exécution à la portée de l'homme du métier, dans le cadre de l'étendue de protection des revendications annexées.

## Revendications

1. Dispositif portable de lavage et de coiffage des cheveux comportant un bac de lavage (100) comprenant un corps creux (110) ouvert sur le dessus et pourvu d'un col d'accueil (116) pour la nuque, un support (400) mobile entre une position escamotée de rangement et une position déployée de service dans laquelle il est apte à supporter ledit bac (100) au dessus du sol, ainsi qu'un couvercle (500) rapportable fixement et de manière amovible sur le dessus dudit bac (100) de sorte à constituer une table de desserte lors de la phase de coiffage des cheveux ; ledit support (400) étant montable de manière amovible sur ledit bac (100), ce support (400) étant en outre apte à être entièrement logé à l'intérieur de ce même bac (100) dans sa position escamotée de rangement, **caractérisé en ce que** ledit corps creux (110) comprend deux logements d'accueil (121) prévus chacun pour loger une extrémité correspondante dudit support (400) en position escamotée de rangement.

2. Dispositif selon la revendication 1, **caractérisé en ce qu'**il comporte un tuyau souple d'évacuation des eaux usées (200) présentant une première extrémité (210) raccordable de manière amovible à un embout de raccordement (119) relié fluidiquement à un orifice d'évacuation (117) ménagé dans la paroi de fond (111) dudit corps creux (110), ledit tuyau (200) étant également apte à être logé enroulé sur lui-même à l'intérieur de ce corps creux (110) contre sa paroi de fond.

3. Dispositif selon la revendication 2, **caractérisé en ce qu'**il comporte également un caisson réceptacle (300) prévu pour recueillir les eaux usées transportées par ledit tuyau souple d'évacuation (200) et étant dimensionné pour loger entièrement ledit bac (100) avec ledit couvercle 500) rapporté sur le dessus de ce bac (100).

4. Dispositif selon la revendication 3, **caractérisé en ce que** ledit caisson réceptacle (300) comporte au moins une poignée de préhension (321) dans sa partie supérieure.

5. Dispositif selon l'une des revendications 3 ou 4, **caractérisé en ce que** ledit caisson réceptacle (300) comporte au moins un couple de deux glissières (332) ménagées en regard l'une de l'autre sur les faces internes de deux de ses parois (330) et prévues pour coopérer à coulissement avec ledit couvercle (500) lors de la mise en place dans ce caisson (300) dudit bac (100) avec ce couvercle (500) rapporté sur le dessus de ce bac (100), de sorte à assurer le plaquage dudit couvercle (500) contre une autre paroi (320) de ce même caisson (300).

6. Dispositif selon l'une des revendications 2 à 5, **caractérisé en ce que** ledit bac (100) comporte également un bouchon (150) rapportable de manière amovible sur ledit embout de raccordement (119).

7. Dispositif selon l'une des revendications 1 à 6, **caractérisé en ce que** lesdits logements d'accueil (121) sont agencés au dessus de la paroi de fond (110) dudit corps creux (110) de sorte que ledit support (400) y soit logé dans une position surplombant cette paroi de fond.

8. Dispositif selon l'une des revendications 1 à 7, **caractérisé en ce que** ledit bac (100) comporte deux anneaux d'attache (124) pour une bandoulière de portage (130) agencés sur la face extérieure de l'une des parois (112) dudit corps creux (110).

9. Dispositif selon l'une des revendications 1 à 8, **caractérisé en ce que** ledit bac (100) comporte deux passages de sangle (125) ménagés dans des excroissances inférieures (114A) dudit corps creux (110) s'étendant en dessous de sa paroi de fond (111).

10. Dispositif selon l'une des revendications 1 à 9, **caractérisé en ce que** ledit support est constitué par un trépied (400) comportant trois jambes télescopiques (410) montées à pivotement par leurs extrémités supérieures sur un sabot (420) recevant à coulissement une colonne (430) portant à son extrémité supérieure une tête (440) sur laquelle est montée articulée à pivotement une plate-forme support (450) apte à être fixée de manière amovible par vissage sur le dessous dudit bac (100).

11. Dispositif selon la revendication 10, **caractérisé en ce que** ledit bac (100) comporte également une platine métallique (160) s'étendant en dessous de la paroi de fond (111) dudit corps (110) et y étant fixée rigidement, ladite platine (160) présentant un perçage taraudé (161) permettant d'assurer la fixation par vissage de ladite plate-forme (450) du trépied (400) sur le dessous de ce bac (100).

12. Dispositif selon l'une des revendications 1 à 11, **caractérisé en ce que** ledit couvercle (500) comporte un panneau (511) ainsi qu'un premier miroir (520) monté articulé à pivotement sur ledit panneau (511) entre une position déployée d'utilisation dans laquelle il saille verticalement au dessus de dernier, et une position rabattue dans laquelle il est logé dans une empreinte de forme correspondante (511A) ménagée dans ce panneau (511).

13. Dispositif selon la revendication 12, **caractérisé en ce que** ledit couvercle (500) comprend également un second miroir (530) logeable à coulissement et de manière amovible dans ledit premier miroir (520).

14. Dispositif selon l'une des revendications 1 à 13, **caractérisé en ce que** ledit couvercle (500) comprend également une poignée de préhension (513).

## Patentansprüche

1. Tragbare Vorrichtung zum Waschen und Frisieren von Haaren, die ein Waschbecken (100), umfassend einen Hohlkörper (110), der auf der Oberseite offen ist und mit einem Aufnahmekragen (116) für den Nacken versehen ist, einen Träger (400), der zwischen einer eingefahrenen Unterbringungsposition und einer ausgefahrenen Gebrauchsposition beweglich ist, in der er geeignet ist, das Waschbecken (100) über dem Boden zu tragen, sowie eine Abdeckung (500) vorweist, die auf der Oberseite des Waschbeckens (100) fest aufsteckbar und abnehmbar ist, um einen Beistelltisch während der Phase des Frisierens der Haare auszubilden;
wobei der Träger (400) auf dem Becken (100) abnehmbar montierbar ist, dieser Träger (400) ferner geeignet ist, im Inneren dieses Beckens (100) in seiner eingefahrenen Unterbringungsposition vollständig verstaut zu sein,
**dadurch gekennzeichnet, dass** der Hohlkörper (110) zwei Aufnahmestauräume (121) umfasst, die jeweils zum Verstauen eines entsprechenden Endes des Trägers (400) in der eingefahrenen Unterbringungsposition vorgesehen sind.

2. Vorrichtung nach Anspruch 1, **dadurch gekennzeichnet, dass** sie einen flexiblen Abflussschlauch für Abwasser (200) vorweist, der ein erstes Ende (210) aufweist, das an einen Anschlussstutzen (119) abnehmbar anschließbar ist, der mit einer Abflussöffnung (117) fluidisch verbunden ist, die in der Bodenwand (111) des Hohlkörpers (110) eingerichtet ist, wobei der Schlauch (200) ferner geeignet ist, um auf sich selbst gewickelt im Inneren dieses Hohlkörpers (110) gegen dessen Bodenwand verstaut zu werden.

3. Vorrichtung nach Anspruch 2, **dadurch gekennzeichnet, dass** sie ferner einen Sammelkasten (300) vorweist, der zum Auffangen des Abwassers, das durch den flexiblen Abflussschlauch (200) transportiert wird, vorgesehen ist und zum vollständigen Verstauen des Beckens (100) mit der Abdeckung (500), die auf der Oberseite dieses Beckens (100) aufgesteckt ist, bemessen ist.

4. Vorrichtung nach Anspruch 3, **dadurch gekennzeichnet, dass** der Sammelkasten (300) mindestens einen Haltegriff (321) in seinem oberen Teil vorweist.

5. Vorrichtung nach einem der Ansprüche 3 oder 4,
**dadurch gekennzeichnet, dass** der Sammelkasten (300) mindestens ein Paar von zwei Gleitführungen (332) vorweist, die einander gegenüberliegend auf den Innenflächen von zwei ihrer Wände (330) und zum gleitenden Zusammenwirken mit der Abdeckung (500) eingerichtet sind, während das Beckens (100) in diesem Kasten (300) eingesetzt wird, mit seiner Abdeckung (500), die auf der Oberseite dieses Beckens (100) aufgesteckt ist, um das Pressen der Abdeckung (500) gegen eine andere Wand (320) dieses Kastens (300) zu sichern.

6. Vorrichtung nach einem der Ansprüche 2 bis 5,
**dadurch gekennzeichnet, dass** das Becken (100) ferner eine Kappe (150) vorweist, die auf dem Anschlussstutzen (119) abnehmbar aufsteckbar ist.

7. Vorrichtung nach einem der Ansprüche 1 bis 6,
**dadurch gekennzeichnet, dass** die Aufnahmestauräume (121) über der Bodenwand (110) des Hohlkörpers (110) angeordnet sind, sodass der Träger (400) dort in einer Position über diese Bodenwand hinausragend verstaut ist.

8. Vorrichtung nach einem der Ansprüche 1 bis 7,
**dadurch gekennzeichnet, dass** das Becken (100) zwei Anbringungsringe (124) für einen Tragegurt (130) vorweist, die auf der Außenfläche einer der Wände (112) des Hohlkörpers (110) angeordnet sind.

9. Vorrichtung nach einem der Ansprüche 1 bis 8,
**dadurch gekennzeichnet, dass** das Becken (100) zwei Riemendurchgänge (125) umfasst, die in unteren Vorsprüngen (114A) des Hohlkörpers (110) eingerichtet sind, die sich unter seiner Bodenwand (111) erstrecken.

10. Vorrichtung nach einem der Ansprüche 1 bis 9,
**dadurch gekennzeichnet, dass** der Träger aus einem Stativ (400) gebildet ist, das drei Teleskopbeine (410) vorweist, die mit ihren oberen Enden auf einem Schuh (420) schwenkbar montiert sind, der eine Säule (430) gleitend aufnimmt, an deren oberen Ende sich ein Kopf (440) befindet, auf dem eine Trägerplattform (450) schwenkbar montiert ist, die geeignet ist, durch Verschraubung auf der Unterseite des Beckens (100) abnehmbar befestigt zu werden.

11. Vorrichtung nach Anspruch 10, **dadurch gekennzeichnet, dass** das Becken (100) ferner eine Metallplatte (160) vorweist, die sich unter der Bodenwand (111) des Körpers (110) erstreckt und dort starr befestigt ist, wobei die Platte (160) eine Gewindebohrung (161) aufweist, die ermöglicht, die Befestigung durch Verschraubung der Plattform (450) des Stativs (400) auf der Unterseite dieses Beckens (100) zu sichern.

12. Vorrichtung nach einem der Ansprüche 1 bis 11,
**dadurch gekennzeichnet, dass** die Abdeckung (500) eine Platte (511) sowie einen ersten Spiegel (520) vorweist, der auf der Platte (511) gelenkig schwenkbar montiert ist, zwischen einer ausgefahrenen Verwendungsposition, in der er vertikal über diese hinausragt, und einer eingeklappten Position, in der er in einer entsprechend geformten Vertiefung (511A) in dieser Platte (511) eingerichtet ist.

13. Vorrichtung nach Anspruch 12, **dadurch gekennzeichnet, dass** die Abdeckung (500) ferner einen zweiten Spiegel (530) umfasst, der in dem ersten Spiegel (520) gleitend und abnehmbar verstaut ist.

14. Vorrichtung nach einem der Ansprüche 1 bis 13,
**dadurch gekennzeichnet, dass** die Abdeckung (500) ferner einen Haltegriff (513) umfasst.

## Claims

1. Portable device for washing and styling the hair, having a washing basin (100) comprising a hollow body (110) which is open at the top and is provided with a collar (116) for receiving the nape of the neck, a support (400) which is movable between a retracted storage position and a deployed service position in which it is able to support said basin (100) above the ground, and a lid (500) which can be securely and removably attached to the top of said basin (100) so as to form a service table during the hair styling phase;
said support (400) being removably mountable on said basin (100), said support (400) further being able to be entirely housed inside said basin (100) in its retracted storage position, **characterized in that** said hollow body (110) comprises two receiving housings (121), each intended to house a corresponding end of said support (400) in the retracted storage position.

2. Device according to claim 1, **characterized in that** it has a flexible wastewater discharge pipe (200) with a first end (210) which can be removably connected to a connecting piece (119) fluidically connected to a discharge opening (117) provided in the bottom wall (111) of said hollow body (110), said pipe (200) also being able to be housed, when coiled up on itself, inside said hollow body (110) against the bottom wall thereof.

3. Device according to claim 2, **characterized in that** it also has a receptacle box (300) which is intended to collect the wastewater transported by said flexible discharge pipe (200) and is dimensioned so as to entirely house said basin (100) with said lid (500) attached to the top of said basin (100).

4. Device according to claim 3, **characterized in that** said receptacle box (300) has at least one gripping handle (321) in its upper part.

5. Device according to either of claims 3 or 4, **characterized in that** said receptacle box (300) has at least one pair of two slideways (332) which are provided opposite one another on the inner faces of two of its walls (330) and are intended to engage slidingly with said lid (500) when said basin (100) is placed in said box (300) with said lid (500) attached to the top of said basin (100), so as to ensure that said lid (500) is pressed against another wall (320) of said box (300).

6. Device according to any of claims 2 to 5, **characterized in that** said basin (100) also has a plug (150) which can be removably attached to said connecting piece (119).

7. Device according to any of claims 1 to 6, **characterized in that** said receiving housings (121) are arranged above the bottom wall (110) of said hollow body (110) so that said support (400) is housed therein in a position overhanging said bottom wall.

8. Device according to any of claims 1 to 7, **characterized in that** said basin (100) has two attachment rings (124) for a carrying strap (130), which attachment rings are arranged on the outer face of one of the walls (112) of said hollow body (110).

9. Device according to any of claims 1 to 8, **characterized in that** said basin (100) has two band passages (125) provided in lower protrusions (114A) of said hollow body (110) which extend below the bottom wall (111) thereof.

10. Device according to any of claims 1 to 9, **characterized in that** said support is made up of a tripod (400) having three telescopic legs (410) which are pivotably mounted via their upper ends on a shoe (420) which slidingly receives a column (430) carrying at its upper end a head (440) on which a support platform (450) is pivotably mounted in an articulated manner, said support platform being able to be removably fastened to the underside of said basin (100) by screwing.

11. Device according to claim 10, **characterized in that** said basin (100) also has a metal plate (160) extending below the bottom wall (111) of said body (110) and being rigidly fastened thereto, said plate (160) having a threaded bore (161) allowing said platform (450) of the tripod (400) to be fastened to the underside of said basin (100) by screwing.

12. Device according to any of claims 1 to 11, **characterized in that** said lid (500) has a panel (511) and a first mirror (520) which is mounted in an articulated manner on said panel (511) so as to pivot between a deployed use position in which it projects vertically above said panel and a folded-down position in which it is housed in a correspondingly shaped recess (511A) provided in said panel (511).

13. Device according to claim 12, **characterized in that** said lid (500) also comprises a second mirror (530) which can be slidingly and removably housed in said first mirror (520).

14. Device according to any of claims 1 to 13, **characterized in that** said lid (500) also comprises a gripping handle (513).
